# EUROPEAN PATENT SPECIFICATION

(11) **EP 2 410 435 B1**
(45) Date of publication and mention of the grant of the patent: **18.03.2015**
(21) Application number: 09841756.1
(22) Date of filing: 28.09.2009
(51) Int. Cl.: G06F 13/10, G06F 13/38

(54) **SIGNAL TRANSMISSION DEVICE AND METHOD**
SIGNALÜBERTRAGUNGSEINRICHTUNG UND VERFAHREN
DISPOSITIF ET PROCÉDÉ D'ÉMISSION DE SIGNAL

(30) Priority: 17.03.2009 CN 200910127191
(43) Date of publication of application: 25.01.2012
(73) Proprietor: ZTE Corporation, Shenzhen, Guangdong 518057 (CN)
(72) Inventor: ZHENG, Fengyuan, Guangdong 518057 (CN); LI, Yu, Guangdong 518057 (CN); DU, Xiaotao, Guangdong 518057 (CN); GUAN, Peng, Guangdong 518057 (CN)
(74) Representative: Jansen, Cornelis Marinus
(86) International application number: PCT/CN2009/074295
(87) International publication number: WO 2010/105473

(56) References cited:
- EP-A1- 1 351 473
- CN-A- 1 414 735
- CN-A- 101 187 911
- CN-A- 101 398 798
- CN-A- 101 510 179
- KR-A- 20010 019 740
- KR-A- 20060 096 737
- US-A1- 2008 201 497

## Description

### Field of the Invention

The present invention relates to the communication field, and in particular to an apparatus and a method for signal transmission.

### Background of the Invention

At present, with the increase of the number of global digital mobile users, the amount of terminals needed by the users is booming rapidly, thus the competition of terminal market is becoming fiercer and fiercer. In order to relieve products supply pressure, terminal manufacturers need to shorten research and development period of the terminals time and again, and often need to perform software upgrading on large quantities of terminals to meet new requirements proposed by customers from time to time. Therefore, the efficiency of downloading software upgrades becomes an important factor to restrict a production period.

Most terminals at present adopt the physical connecting mode of mapping a universal serial bus (USB) to a serial device interface to perform data communications with a computer, or use a universal asynchronous receiver (UART) mode for downloading. For conventional versions of USB mode and UART mode downloading, the advantages are fast downloading speed, simple operation and easy implementation; and the disadvantage is that the system crash problem caused by the situations of wrong version downloading and the like can not be solved through self-repairing, but has to be solved by downloading modes in protocols such as joint test action group (JTAG). The JTAG downloading mode is generally used for repairing the terminal system crash caused by wrong terminal software version downloading, and the disadvantages thereof is that the downloading speed is slow.

Not an effective solution has been put forward yet at present for the problem in the related art that the system crash occurring during the downloading by using the USB mode or the UART mode can not be self-repaired.

It is noted that the patent publication EP1351473 A1 discloses a software upgrade method for a switching device in a 2-layer network environment.

### Summary of the Invention

The present invention is proposed for the problem that the system crash occurring during the downloading by using the USB mode or the UART mode can not be self-repaired. For this reason, the present invention provides a solution for signal transmission to solve the above-mentioned problem.

An apparatus for signal transmission is provided according to claim 1 of the present invention.

The apparatus for signal transmission according to the present invention is used to transmit a signal for upgrading and/or repairing a terminal, is applicable to a communication system which comprises software and the terminal, and comprises: a downloading panel control module, configured to transmit a data packet from the software to the terminal, and to transmit the signal from the software according to whether a response data packet corresponding to the data packet is received from the terminal; and a protocol conversion module, configured to receive the signal from the downloading panel control module, to convert the signal into a joint test action group (JTAG) signal, and to transmit the converted JTAG signal to the terminal.

Preferably, the downloading panel control module comprises: a judgment sub-module, configured to judge whether the response data packet is received; a first transmission sub-module, configured to transmit the signal directly to the terminal under a situation that the judgment result of the judgment sub-module is positive; and a second transmission sub-module, configured to transmit the signal to the protocol conversion module under a situation that the judgment result of the judgment sub-module is negative.

Preferably, the above apparatus also comprises: a terminal interface, configured to carry out communications between the apparatus and the terminal.

Preferably, the terminal interface of the above apparatus is a customized DB25.

Preferably, the downloading panel control module comprises one of the following: a programmable logic device, and a single-chip microcomputer.

Preferably, the above software is personal computer software, and the signal from the personal computer software comprises one of the following: a USB signal and a UART signal.

A method and corresponding computer program product for signal transmission are provided according to claims 6 and 9 respectively of the present invention.

The method for signal transmission according to the present invention is used to transmit a signal for upgrading and/or repairing a terminal, is applicable to a communication system which comprises software and the terminal, and comprises: transmitting a data packet from the software to the terminal; and transmitting the signal from the software according to whether a response data packet corresponding to the data packet is received from the terminal.

Preferably, the step of transmitting the signal according to whether the response data packet is received from the terminal comprises: transmitting the signal directly to the terminal if the response data packet is received from the terminal; and otherwise, converting the signal into a JTAG signal, and transmitting the converted JTAG signal to the terminal..

Preferably, the signal from the software comprises one of the following: a USB signal, and a UART signal.

Preferably, the above software is personal computer software.

In virtue of the above technical solution of the present invention, according to whether the response data packet is received from the terminal, the state of the terminal is judged and whether the signal from the software needs to be converted is determined, and then the signal is transmitted to the terminal for upgrading and repairing, thus the problem, that the system crash occurring during the downloading by using the USB mode or the UART mode can not be self-repaired, is solved, and the efficiency of version upgrading is improved.

### Brief Description of the Drawings

Drawings, provided for further understanding of the present invention and forming a part of the specification, are used to explain the present invention together with embodiments of the present invention rather than to limit the present invention, wherein
Fig.1 is a structure diagram of an apparatus for signal transmission according to the embodiments of the present invention;
Fig.2 is a specific structure diagram of the apparatus for signal transmission according to the embodiments of the present invention;
Fig.3 is a flowchart of a method for signal transmission according to the embodiments of the present invention; and
Fig.4 is a detailed flowchart of the method for signal transmission according to the embodiments of the present invention.

### Detailed Description of Embodiments

### Functional Overview

In consideration of the problem in the related art that the system crash occurring during the downloading by using the USB mode or the UART mode can not be self-repaired, the embodiments of the present invention provide a solution for signal transmission. In the solution, a downloading panel (i.e., an apparatus for signal transmission), with a controllable function of personnel computer (PC) sides and a protocol conversion module, is used; a data packet is transmitted by software; the state of a terminal is judged according to whether a response data packet is received; the software automatically enables a USB channel or a UART channel by a downloading panel controlling module on the downloading panel, or carries out a conversion from a USB or UART signal(s) to a JTAG protocol signal(s), and automatically selects a protocol to download data. Therefore, the system crash problem occurring during terminal upgrading is solved, and the efficiency of version upgrading is greatly improved. It should be noted that the software related to the technical solution provided by the embodiments of the present invention is not limited to a PC side, but can also be applied to devices with software loading capacities such as a single-chip microcomputer development panel or an embedded system, etc. The embodiments of the present invention will describe specific implementation processes of the present invention in detail by taking the software at the PC side as an example.

The embodiments of the present invention and the characteristics in the embodiments can be combined with each other if there is no conflict. The present invention will be described in detail hereinafter with reference to the drawings and in connection with the embodiments.

### Device Embodiment

An apparatus for signal transmission is provided according to the embodiments of the present invention, is used to transmit a signal(s) for upgrading and/or repairing a terminal, and is applicable to a communication system which comprises software and the terminal. The apparatus is provided with standard USB and serial communication interfaces.

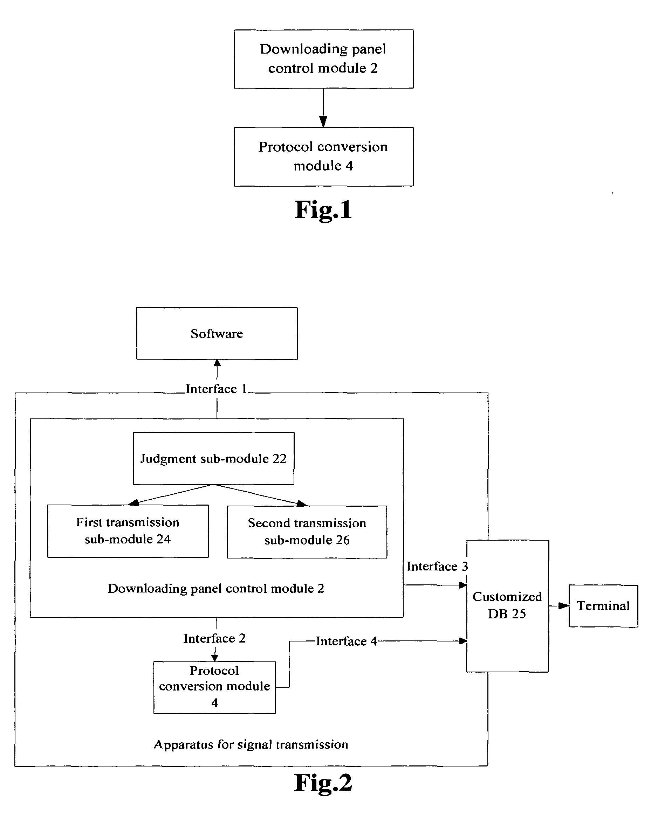

Fig.1 is a structure diagram of an apparatus for signal transmission according to the embodiments of the present invention. As shown in Fig.1, the apparatus comprises: a downloading panel control module 2 and a protocol conversion module 4; and the structure of the apparatus will be described hereinafter.

The downloading panel control module 2 is configured to transmit a data packet from the software to the terminal, and transmitting the signal(s) from the software according to whether a response data packet corresponding to the data packet is received from the terminal; and the signal(s) here can be a USB signal or a UART signal. Wherein the downloading panel control module 2 can be realized by one of the followings: a programmable logic device and a single-chip microcomputer. That is to say, the downloading panel control module 2 can be realized by using a single programmable logic device (e.g. EPF10K100ABI600-2, EPF10K10ATC100-3, and the like) or the single-chip microcomputer (e.g. AT85C51, C8051, At89C/S51, PIC16CXX, EM78P447SA\B\NA\B, EM78P257A\B, and the like).

The protocol conversion module 4, coupled to the downloading panel control module 2, is configured to receive the signal(s) from the downloading panel control module 2, convert the signal(s) into a joint test action group (JTAG) signal(s), and to transmit the converted JTAG signal(s) to the terminal. That is to say, the conversion from the USB signals and serial signals (i.e., the UART signals) to the JTAG signal(s) is carried out by the protocol conversion module 4.

By the present embodiment, an apparatus for signal transmission, which can automatically select the protocols so that the terminal can be upgraded and repaired, is provided.

Fig.2 is a specific structure diagram of the apparatus for signal transmission according to embodiments of the present invention. As shown in Fig.2, the downloading panel control module 2 comprises: a judgment sub-module 22, a first transmission sub-module 24, and a second transmission sub-module 26; and the structure of the apparatus will be described hereinafter.

The judgment sub-module 22 is configured to judge whether the response data packet is received; the first transmission sub-module 24, coupled to the judgment sub-module 22, is configured to directly transmit the signal(s) to the terminal under a situation that the judgment result of the judgment sub-module 22 is positive; and the second transmission sub-module, coupled to the judgment sub-module 22, is configured to transmit the signal(s) to the protocol conversion module 4 under a situation that the judgment result of the judgment sub-module 22 is negative.

The apparatus also comprises a terminal interface which is used to carry out the communications between the apparatus and the terminal. Preferably, the terminal interface may be a customized DB25.

In addition, Fig.2 also shows interfaces among the modules. The interfaces here mainly comprise: an interface 1, an interface 2, an interface 3, and an interface 4. The functions of each of the interfaces will be described hereinafter.

The interface 1: the software at the PC side communicates with the downloading panel control module and receives information returned from the downloading panel control module via the interface 1.

The interface 2 is used to realize the communications between the downloading panel control module and the protocol conversion module.

The interface 3: the software at the PC side directly communicates with the terminal via the interface 3, so as to complete the upgrading and repairing of a terminal device.

The interface 4: the software at the PC side uses the JTAG protocol to carry out the upgrading and repairing of the terminal via the interface 4.

For the interface 2 and the interface 4, the enabling and disabling thereof can be controlled by the software at the PC side.

In specific implementation processes, the downloading panel control module directly communicates with the software at the PC side via the interface 1. If the PC side and the terminal successfully transmit the data packets through the USB and the UART interface, i.e., the terminal having feedback signal(s), the software at the PC side communicates with the downloading panel control module, and directly transmits the signal(s) such as USB signals and UART signals to the terminal via the interface 3, the customized DB25 and a tail-plug wire of the terminal interface, so that the downloading repairing of the terminal can be completed. If the software at the PC side does not receive a reply corresponding to the signal(s) that is/are transmitted to the terminal through the USB and UART interfaces, i.e., the terminal does not feedback any signal, the software at the PC side communicates with the downloading panel control module through the interface 1; the conversion from the USB and UART signals to the JTAG signal(s) is carried out under the control of the downloading panel control module; i.e., the downloading panel control module transmits the USB and UART signals to the protocol conversion module by the interface 2; the protocol conversion module carries out the conversion from the USB and UART signals to the JTAG signal(s), and transmits the converted JTAG signal(s) to the terminal via the interface 4, the customized DB25 and the tail-plug wire of the terminal interface, so that the downloading repairing of the terminal can be completed.

The processes of how to upgrade and repair the terminal through the USB and UART protocols are already a mature technology in the conventional art, so that unnecessary details will not be given here any more.

In virtue of the present embodiment, the software at the PC side controls the downloading panel control module to enable the USB or the JTAG downloading circuit according to the state of the terminal; wherein when the terminal is in a system crash state, the apparatus can realize protocol conversion; and when the terminal is in a normal state, the apparatus plays a role of signal transmission.

### Method embodiment

A method for signal transmission is provided according to the embodiments of the present invention, is used to transmit a signal(s) for upgrading and/or repairing a terminal, and is applicable to a communication system which comprises software and the terminal. Besides, the method can be used to realize the above apparatus for signal transmission.

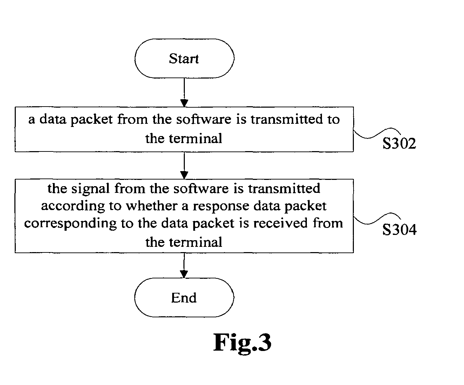

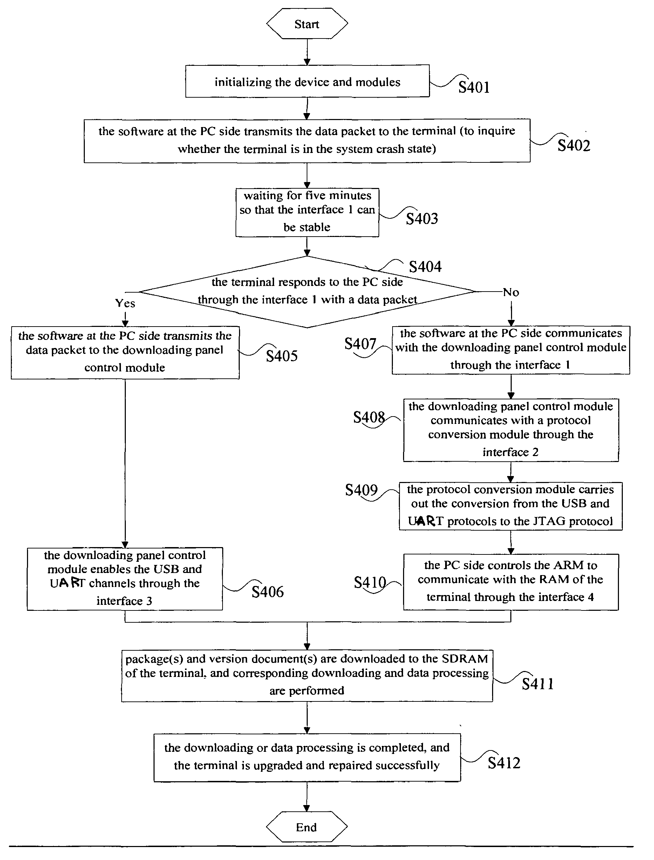

Fig.3 is a flowchart of a method for signal transmission according to embodiments of the present invention. As shown in Fig.3, the method comprises the steps S302-S304 as follows.

Step S302, a data packet from the software is transmitted to the terminal.

Step S304, a signal(s) from the software is/are transmitted according to whether a response data packet corresponding to the data packet from the software is received from the terminal. The signal(s) here can be a USB signal(s) or a UART signal(s).

Specifically, if the response data packet is received from the terminal, the signal(s) is/are directly transmitted to the terminal; otherwise, the signal(s) is/are converted into a JTAG signal(s), and the converted JTAG signal(s) is/are transmitted to the terminal.

By means of the present embodiments, a method for signal transmission, which can automatically select a protocol so that the terminal can be upgraded and repaired, is provided.

The apparatus and the method for transmitting the signal provided by the embodiments of the present invention will be further explained hereinafter in connection with an example. In the following example, the circumstance of using an AT85C51 signal-chip microcomputer, on which pre-compiled programs have been recorded, as the downloading panel control module, so as to realize the communications between the software at the PC side and the downloading panel control module, and to enable corresponding peripheral circuits will be taken as an example. That is to say, the downloading panel control module is used to carry out direct communications with the software at the PC side. In the first place, the customized DB25 is connected with the tail-plug wire of the terminal interface so that the terminal is connected. The PC and the apparatus are connected with each other through a USB wire or a serial wire.

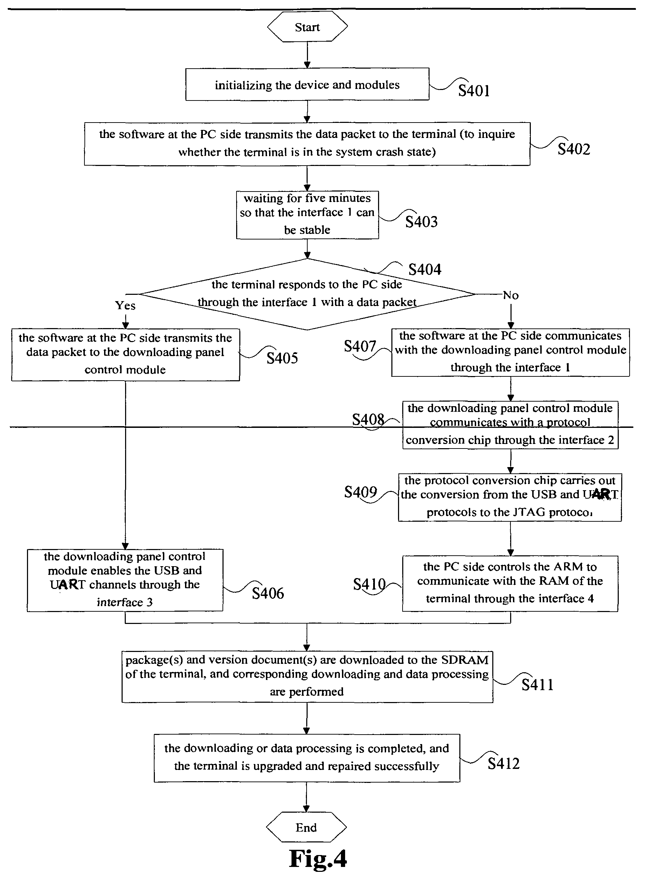

Fig.4 is a detailed flowchart of the method for transmitting the signal according to the embodiments of the present invention. As shown in Fig.4, the method comprises the steps S401-S412 as follows.

Step S401, the software at the PC side initializes the terminal, the downloading panel control module and a USB interface.

Step S402, the software at the PC side transmits the data packet to the terminal to inquire whether the terminal is in the system crash state (i.e., the above step S302).

Specifically, the software at the PC side disables the interface 2 and the interface 4, directly connects with the interface 3 circuit through the interface 1, and transmits a pre-defined data packet to the terminal through the customized DB25.

Step S403, five minutes are waited for so that the interface 1 can be stable.

The following steps S404-S410 are the specific implementation processes of the step S304.

Step S404, it is judged whether the terminal has made a response to the data packet to the PC side through the interface 1, wherein step S405 is executed under a situation that the judgment result is "yes"; and step S407 is executed under a situation that the judgment result is "no".

Step S405, the software at the PC side receives the data packet which is transmitted to the interface 1 through the interface 3, and transmits the data packet to the downloading panel control module. That is to say, the terminal receives the data packet from the software at the PC side, analyzes the data packet, and responds to the software at the PC side through the interface 1 with a data packet.

Step S406, the downloading panel control module enables the USB and UART channels through the interface 3.

The above steps S405-S406 are flows of the terminal upgrading by using the USB or serial protocols; and the upgrading and repairing of the terminal are completed through the circuits of the interface 1 and the interface 3.

Step S407, the software at the PC side communicates with the downloading panel control module through the interface 1.

Specifically, the terminal has not responded to the software at the PC side with any data packet. In this case, the software at the PC side controls the downloading panel control module to enable the interface 2 and the interface 4, so that the conversion from the USB and UART protocols to the JTAG protocol can be completed.

Step S408, the downloading panel control module communicates with the protocol conversion module through the interface 2.

Step S409, the protocol conversion module carries out the conversion from the USB and UART protocols to the JTAG protocol.

Step S410, the PC side controls Advanced RISC Machines (ARM, wherein the RISC is referred to as a reduced instruction set computer) to communicate with Random Access Memory (RAM) of the terminal through the interface 4.

The above steps S407-S410 are flows of the terminal upgrading by using the JTAG protocol; and the upgrading and repairing of the terminal are completed through the circuits of the interface 2 and the interface 4.

Step S411, plug-in(s) and version document(s) are downloaded to a synchronous dynamic random access memory (SDRAM) of the terminal, and downloading and data processing are performed accordingly.

Step S412, the downloading or the data processing is completed, and the terminal is upgraded and repaired successfully.

Through the present embodiment, the protocols are automatically selected, and the upgrading and repairing of the terminal are realized.

To sum up, in virtue of the embodiments of the present invention, the upgrading and I repairing circuits which are suitable for current state of the terminal are enabled automatically according to the instructions of the software at the PC side. That is to say, according to whether the response data packet is received from the terminal, the state of the terminal is determined and whether the signal(s) from the software need(s) to be converted is determined, and then the signal(s) is/are transmitted to the terminal to upgrade and repair the terminal. The present invention solves the problem that the system crash occurring during the downloading by using the USB mode or the UART mode can not be self-repaired, improves the efficiency of version upgrading, and realizes the intelligent upgrading and repairing of the system of the terminal.

Obviously, those skilled in the art shall understand that individual modules or individual steps of the present invention can be implemented with general computing devices, they may be integrated in a single computing device or distributed in network formed by a plurality of computing devices, optionally, they may be implemented by using program codes executable by computing devices, thus they may be stored in memory devices for execution by the computing devices, or implemented by making them into integrated circuit module respectively, or by making several means or steps in to a single IC. Thus, the present invention is not limited to any particular combination of hardware and software.

## Claims

1. An apparatus for signal transmission, which is used to transmit a signal for upgrading and/or repairing a terminal, and which is applicable to a communication system which comprises software and the terminal, **characterized by** the apparatus comprising:
a downloading panel control module (2), configured to transmit a data packet from the software to the terminal, and to judge whether a response to the data packet is received from the terminal, if yes, then to transmit the signal from the software to the terminal, if not, then to transmit the signal to a protocol conversion module (4); and
a protocol conversion module (4), configured to receive the signal from the downloading panel control module (2), to convert the signal into a Joint Test Action Group (hereafter, UTAG) signal, and to transmit the converted JTAG signal to the terminal.

2. The apparatus according to Claim 1, **characterized in that** the apparatus further comprises:
a terminal interface, configured to carry out communications between the apparatus and the terminal.

3. The apparatus according to Claim 2, **characterized in that** the terminal interface is a customized DB25.

4. The apparatus according to any one of Claims 1-3, **characterized in that** the downloading panel control module (2) comprises one of the following:
a programmable logic device, and a single-chip microcomputer.

5. The apparatus according to any one of Claims 1-3, **characterized in that** the software is personal computer software, and the signal from the personal computer software comprises one of the following:
a USB signal and a UART signal.

6. A method for signal transmission, which is used to transmit a signal for upgrading and/or repairing a terminal, and which is applicable to a communication system which comprises software and the terminal, **characterized by** the method comprising:
transmitting a data packet from the software to the terminal;
judging whether a response to the data packet is received from the terminal;
transmitting the signal from the software to the terminal if a response to the data packet is received;
and otherwise, converting the signal into a JTAG signal, and transmitting the converted JTAG signal to the terminal.

7. The method according to Claim 6, **characterized in that** the signal from the software comprises one of the following:
a USB signal, and a UART signal.

8. The method according to Claim 6, **characterized in that** the software is personal computer software.

9. A computer program product for implementing a method for signal transmission, which is used to transmit a signal for upgrading and/or repairing a terminal, the computer program product being applicable to a communication system which comprises software and the terminal, which computer program product comprises instructions for causing a processor to perform the steps of the method of claim 6.

## Patentansprüche

1. Signalübertragungseinrichtung, verwendet zur Übertragung eines Signals zur Aktualisierung und/oder Reparatur eines Datenendgerätes und die auf ein Kommunikationssystem anwendbar ist, das Software und das Datenendgerät umfasst, **dadurch gekennzeichnet, dass** die Einrichtung Folgendes umfasst:
ein Download-Pultsteuerungsmodul (2), konfiguriert zum Übertragen eines Datenpakets von der Software zu dem Datenendgerät und zum Beurteilen, ob eine Antwort auf das Datenpaket von dem Datenendgerät empfangen wird, falls ja, um dann das Signal von der Software zu dem Datenendgerät zu übertragen, und falls nicht, das Signal zu einem Protokollkonvertierungsmodul (4) zu übertragen; und
ein Protokollkonvertierungsmodul (4), konfiguriert zum Empfangen des Signals von dem Download-Pultsteuerungsmodul (2), um das Signal in ein Joint Test Action Group (im Folgenden JTAG)-Signal zu konvertieren und das konvertierte JTAG-Signal zum Datenendgerät zu übertragen.

2. Einrichtung nach Anspruch 1, **dadurch gekennzeichnet, dass** die Einrichtung ferner umfasst:
eine Datenendgerät-Schnittstelle, konfiguriert zum Ausführen von Kommunikationen zwischen der Einrichtung und dem Datenendgerät.

3. Einrichtung nach Anspruch 2, **dadurch gekennzeichnet, dass** die Datenendgerät-Schnittstelle eine individuell angepasste DB25 ist.

4. Einrichtung nach einem der Ansprüche 1-3, **dadurch gekennzeichnet, dass** das Download-Pultsteuerungsmodul (2) eines der Folgenden umfasst:
eine programmierbare Logik-Schaltung und einen Einzelchip-Mikrocomputer.

5. Einrichtung nach einem der Ansprüche 1-3, **dadurch gekennzeichnet, dass** die Software eine Personalcomputer-Software ist und das Signal von der Personalcomputer-Software eines der Folgenden umfasst:
ein USB-Signal und ein UART-Signal.

6. Verfahren zur Signalübertragung, das verwendet wird, um ein Signal für die Aktualisierung und/oder Reparatur eines Datenendgerätes zu übertragen, und das auf ein Kommunikationssystem anwendbar ist, das Software und das Datenendgerät umfasst, **dadurch gekennzeichnet, dass** das Verfahren Folgendes umfasst:
das Übertragen eines Datenpakets von der Software zu dem Datenendgerät;
das Beurteilen, ob eine Antwort auf das Datenpaket vom Datenendgerät empfangen wird;
das Übertragen des Signals von der Software zu dem Datenendgerät, falls eine Antwort auf das Datenpaket empfangen wird;
und ansonsten das Konvertieren des Signals in ein JTAG-Signal und Übertragen des konvertierten JTAG-Signals zu dem Datenendgerät.

7. Verfahren nach Anspruch 6, **dadurch gekennzeichnet, dass** das Signal von der Software eines der Folgenden umfasst:
ein USB-Signal und ein UART-Signal.

8. Verfahren nach Anspruch 6, **dadurch gekennzeichnet, dass** die Software eine Personalcomputer-Software ist.

9. Computerprogrammprodukt zur Implementierung eines Verfahrens zur Signalübertragung, das verwendet wird, um ein Signal zur Aktualisierung und/oder Reparatur eines Datenendgerätes zu übertragen, wobei das Computerprogrammprodukt auf ein Kommunikationssystem anwendbar ist, das Software und das Datenendgerät umfasst, wobei das Computerprogrammprodukt Befehle umfasst, um einen Prozessor zur Ausführung des Verfahrens nach Anspruch 6 zu veranlassen.

## Revendications

1. Appareil de transmission de signaux, utilisé pour transmettre un signal servant à mettre à jour et/ou réparer un terminal, et pouvant être appliqué à un système de communication qui comprend un logiciel et le terminal, **caractérisé en ce que** l'appareil comprend :
un module de commande de panneau de téléchargement (2), configuré pour transmettre un paquet de données du logiciel vers le terminal, et pour déterminer si une réponse au paquet de données est reçue du terminal, si oui, pour transmettre alors le signal du logiciel vers le terminal, sinon, pour transmettre alors le signal à un module de conversion de protocole (4) ; et
un module de conversion de protocole (4) configuré pour recevoir le signal du module de commande de panneau de téléchargement (2), pour convertir le signal en un signal du comité d'action de test *« Joint Test Action Group* », appelé ci-après signal JTAG, et pour transmettre le signal JTAG converti au terminal.

2. Appareil selon la revendication 1, **caractérisé en ce que** l'appareil comprend en outre une interface de terminal configurée pour mettre en oeuvre les communications entre l'appareil et le terminal.

3. Appareil selon la revendication 2, **caractérisé en ce que** l'interface de terminal est une interface DB25 personnalisée.

4. Appareil selon l'une quelconque des revendications 1 à 3, **caractérisé en ce que** le module de commande de panneau de téléchargement (2) comprend l'un des éléments suivants : un dispositif logique programmable et un micro-ordinateur monopuce.

5. Appareil selon l'une quelconque des revendications 1 à 3, **caractérisé en ce que** le logiciel est un logiciel d'ordinateur personnel, et le signal provenant du logiciel d'ordinateur personnel comprend l'un des signaux suivants : un signal USB et un signal d'émetteur-récepteur asynchrone universel.

6. Procédé de transmission de signaux, utilisé pour transmettre un signal servant à mettre à jour et/ou réparer un terminal, et pouvant être appliqué à un système de communication qui comprend un logiciel et le terminal, **caractérisé en ce que** le procédé comprend les étapes suivantes :
transmettre un paquet de données du logiciel vers le terminal ;
déterminer si une réponse au paquet de données est reçue du terminal ;
transmettre le signal du logiciel vers le terminal si une réponse au paquet de données est reçue ;
et sinon, convertir le signal en un signal JTAG, et transmettre le signal le signal JTAG converti au terminal.

7. Procédé selon la revendication 6, **caractérisé en ce que** le signal provenant du logiciel comprend l'un des signaux suivants : un signal USB et un signal d'émetteur-récepteur asynchrone universel.

8. Procédé selon la revendication 6, **caractérisé en ce que** le logiciel est un logiciel d'ordinateur personnel.

9. Produit de programme informatique pour mettre en oeuvre un procédé de transmission de signaux qui est utilisé pour transmettre un signal servant à mettre à jour et/ou réparer un terminal, le produit de programme informatique pouvant être appliqué à un système de communication qui comprend un logiciel et le terminal, lequel produit de programme informatique comprend des instructions destinées à faire exécuter par un processeur les étapes du procédé de la revendication 6.
